# EUROPÄISCHE PATENTANMELDUNG

(11) **EP 2 056 119 A1**
(43) Veröffentlichungstag der Anmeldung: **06.05.2009**
(21) Anmeldenummer: 08105325.8
(22) Anmeldetag: 12.09.2008
(51) Int. Cl.: G01S 1/00

(54) **Verfahren und Vorrichtung zum Bestimmen der Suchreihenfolge bei einem GPS Kaltstart**

(30) Priorität: 31.10.2007 DE 102007052151
(71) Anmelder: ROBERT BOSCH GMBH, 70442 Stuttgart (DE)
(72) Erfinder: Brock, Anke, 31134 Hildesheim (DE)

(57) **Zusammenfassung**

Die Erfindung betrifft ein Verfahren zur Auswahl wenigstens eines Satelliten-Paares unter mehreren Satelliten (A1-A4 bis F1-F4) für eine Suchreihenfolge (Schritt S3*) zur Bestimmung von Satelliten zur Initialisierung eines Empfängers für ein satellitengestütztes Ortungssystem. Die Satelliten sind dabei jeweils auf mehreren Umlaufbahnen (A-F) um die Erde angeordnet. Dabei wird ein Satelliten-Paar bestehend aus zwei Satelliten (A1, A4; A2, A3) auf wenigstens einer ersten Umlaufbahn (A) ausgewählt, wobei die beiden Satelliten dabei in einem Winkel auf der Umlaufbahn (A) voneinander beabstandet sind, der einem Winkel von 180° möglichst nahe kommt oder am nächsten ist.

## Beschreibung

### Stand der Technik

Die Erfindung betrifft ein Verfahren und eine Vorrichtung zum Bestimmen der Suchreihenfolge bei einem GPS Kaltstart.

GPS basiert auf Satelliten, die ständig ihre sich ändernde Position und die genaue Uhrzeit ausstrahlen. Aus deren Signallaufzeit können GPS-Empfänger dann ihre eigene Position und Geschwindigkeit berechnen. Theoretisch reichen die Signale von drei Satelliten aus, um daraus die genaue Position und Höhe bestimmen zu können. In der Praxis haben aber GPS-Empfänger normalerweise keine Uhr, die genau genug ist, um die Laufzeiten der Satelliten korrekt messen zu können. Deshalb wird das Signal eines vierten Satelliten benötigt, mit dem dann auch die genaue Zeit im Empfänger bestimmt werden kann. Mit den GPS-Signalen lässt sich dabei beispielsweise nicht nur die Position, sondern auch die Geschwindigkeit und die Bewegung des Empfängers bestimmen.

Aus dem Stand der Technik ist bekannt, dass beim Start eines GPS Empfängers nach den Satelliten gesucht wird, die gut empfangen werden können. Da nur nach einer bestimmten Anzahl von Satelliten zur selben Zeit gesucht werden kann, d.h. abhängig von der Anzahl der Kanäle des Empfängers, braucht man normalerweise mehrere Suchläufe, um alle Satelliten zu finden, deren Empfänger gut ist. Da man normalerweise mindestens vier Satelliten für eine 3D Berechnung benötigt, muss man so lange suchen, bis man mindestens 4 Treffer gefunden hat. Mit jedem zusätzlichen Satelliten verbessert sich die Genauigkeit der Berechnung und deswegen ist es wünschenswert, möglichst schnell alle Satelliten mit gutem Empfang zu finden.

Beim Kaltstart hat man hierbei keine Vorkenntnisse über die Anordnung der Satelliten in Bezug auf den Empfänger. Deswegen werden die Satelliten momentan in wahlloser Reihenfolge gesucht. Dadurch kann es aber unter Umständen sehr lange dauern bis genügend Satelliten zur Berechnung gefunden werden.

Aus der EP 0 920 638 B1 ist des Weiteren ein Verfahren zur Initialisierung eines Empfängers zur Positionsbestimmung bekannt und ein entsprechender Empfänger. Gemäß der EP 0 920 638 B1 definiert jede Umlaufbahn eines Satelliten eine Ebene, wobei für die Suche nach einem ersten Satelliten eine Folge von Senderkennungen von Satelliten, die in dem Empfänger gespeichert ist, vom Empfänger ausgewählt wird, wobei alle Satelliten von mindestens zwei Umlaufbahnen ausgewählt werden, deren Ebenen, die durch die Umlaufbahnen definiert werden, Winkel einschließen, die in einem Bereich von 80° bis 100° liegen.

Gemäß der vorliegenden Erfindung, wie in Anspruch 1 beansprucht, wird nun ein Verfahren bereitgestellt zur Auswahl wenigstens eines Satelliten-Paares unter mehreren Satelliten für eine Suchreihenfolge, zur Bestimmung von Satelliten zur Initialisierung eines Empfängers für ein satellitengestütztes Ortungssystem, bei welchem der Empfänger beispielsweise über Laufzeitmessungen zu verschiedenen Satelliten eine dreidimensionale Positionsbestimmung durchführt, wobei die Satelliten jeweils auf mehreren Umlaufbahnen um die Erde angeordnet sind, wobei ein Satelliten-Paar bestehend aus zwei Satelliten auf wenigstens einer ersten Umlaufbahn ausgewählt wird, und wobei die beiden Satelliten dabei in einem Winkel auf der Umlaufbahn voneinander beabstandet sind, der einem Winkel von 180° möglichst nahe kommt oder am nächsten ist, beispielsweise im Vergleich zu anderen Satelliten-Paaren der Umlaufbahn.

Hierbei sucht man bzw. wählt man zwei Satelliten auf derselben Umlaufbahn aus, deren räumliche Anordnung so ist, dass sie beide im Wesentlichen nicht zur selben Zeit für den Empfänger sichtbar sind. Dies hat den Vorteil, dass man auf diese Weise zumindest einen der Satelliten finden kann. Mit anderen Worten, sucht man also Satelliten in solchen Paaren, dann kann man davon ausgehen, dass genau 50% der gesuchten Satelliten auch gefunden werden. Auf diese Weise kann die Suchzeit für Satelliten verkürzt werden.

In einer weiteren erfindungsgemäßen Ausführungsform werden auf der ersten Umlaufbahn jeweils zwei Satelliten-Paare ausgewählt, wobei die beiden Satelliten jedes Satelliten-Paares dabei in einem Winkel auf der Umlaufbahn voneinander beabstandet sind, der einem Winkel von 180° möglichst nahe kommt oder am nächsten ist bzw. die beiden Satelliten jedes Satelliten-Paares weisen eine Differenz in der mittleren Anomalie auf, die einem Winkel von 180° möglichst nahe kommt oder am nächsten ist, im Vergleich zu anderen Satelliten-Paaren der Umlaufbahn. Auf diese Weise kann jeweils eines der Satelliten-Paare für eine erste Suchreihenfolge verwendet werden, um einen Satelliten zu finden. Das andere Satelliten-Paar kann dann in einer nächsten Suchreihenfolge verwendet werden, wenn beispielsweise noch nicht alle Satelliten gefunden wurden. Auf diese Weise lässt sich die Suchzeit zusätzlich verkürzen.

In einer anderen erfindungsgemäßen Ausführungsform wird neben dem Satelliten-Paar auf der ersten Umlaufbahn ein Satelliten-Paar aus einer zweiten Umlaufbahn bestimmt, beispielsweise einer benachbarten Umlaufbahn, wobei die Satelliten des Satelliten-Paars der ersten Umlaufbahn mit den Satelliten des Satelliten-Paars der zweiten Umlaufbahn eine Differenz in der mittleren Anomalie aufweisen, die einem Winkel von 90° möglichst nahe kommt oder am nächsten liegt. Auf diese Weise kann erzielt werden, dass ein großer Teil des Himmels abgesucht wird und dadurch die Suche nach Satelliten weiter verbessert werden kann.

Gemäß einer weiteren erfindungsgemäßen Ausführungsform werden beispielsweise zuerst oder nur die Satelliten der Satellitenumlaufbahnen für eine Suchreihenfolge gewählt, denen ein Slot auf der jeweiligen Umlaufbahn zugeordnet ist. Auf diese Weise wird nach Satelliten denen kein Slot zugeordnet ist als letztes oder gar nicht gesucht.

In einer weiteren erfindungsgemäßen Ausführungsform wird zuerst die Zuweisung der jeweiligen Satelliten zu den Slots aktualisiert, die Zuweisung wird dabei beispielsweise im Internet veröffentlicht. Auf diese Weise kann sichergestellt werden, dass keine Satelliten in die Suchreihenfolge aufgenommen werden, die beispielsweise nicht in Betrieb sind.

Ausführungsbeispiele der Erfindung sind nachstehend anhand der schematischen Figur der Zeichnung näher erläutert. Es zeigt:
Figur 1 ein Beispiel für ein Ablaufdiagramm einer Satellitensuche.
Figur 2 ein Ablaufdiagramm einer Satellitensuche mit einem optimierten Suchverfahren, und
Figur 3 eine Darstellung einer Anordnung von Slots für Satelliten auf Umlaufbahnen bzw. Ellipsenbahnen.

Gemäß der Erfindung wird die Suchreihenfolge der Satelliten so optimiert, dass auch bei einem Kaltstart des GPS-Systems schneller Satelliten gefunden werden können. Die Satelliten werden hierbei nicht wahllos in einer beliebigen Reihenfolge gesucht, sondern durch eine Auswahleinrichtung gezielt gesucht und beispielsweise in einer Speichereinrichtung abgelegt, um so die Suchzeit zu verkürzen.

Gemäß der Erfindung kann auch ohne zu wissen, wie die Satelliten räumlich in Bezug auf den Empfänger angeordnet sind, die Suchreihenfolge optimiert werden. Beispielsweise ist die Anordnung der Satelliten auf den Ellipsen bekannt. Aus der räumlichen Anordnung der Satelliten untereinander lässt sich die Suchreihenfolge optimieren. Außerdem gibt es beispielsweise Informationen darüber, welche Satelliten gerade nicht im Umlauf sind. Diese können bei der Suche somit ausgelassen werden.

Der Vorteil der Erfindung liegt darin, dass man durch eine optimierte Suchreihenfolge schneller Satelliten finden kann. Dadurch kann der Kaltstart des GPS-Empfängers beschleunigt werden. Hierbei kann man früher mit den Berechnungen von Position, Zeit und Geschwindigkeit beginnen und somit früher eine genauere Position eines GPS-Empfängers bestimmen.

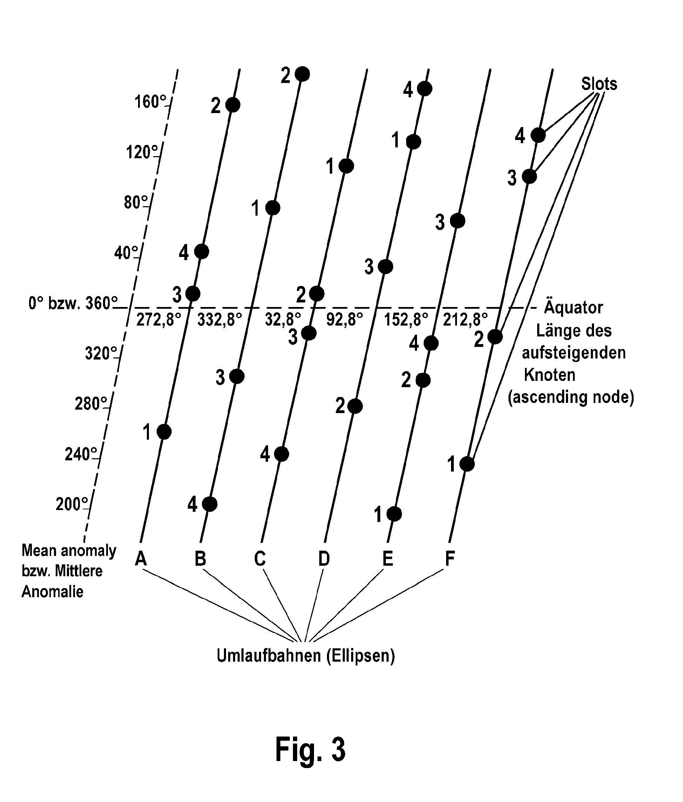

GPS-Satelliten bewegen sich derzeit auf sechs Umlaufbahnen bzw. Ellipsen. Es gibt mehrere Slots pro Ellipse in denen Satelliten angeordnet sein können. Pro Ellipse gibt es mindestens vier Slots, auf manchen Ellipsen sind aber auch beispielsweise bis zu sieben Slots besetzt. Die Anordnung der Slots auf den Ellipsen ist fest, die Zuordnung der Satelliten zu den Slots ändert sich jedoch in relativ großen Zeitintervallen. Die Zuordnung wird im Internet veröffentlicht. Da die sinnvolle Suchreihenfolge unabhängig davon ist, welcher Satellit sich in welchem Slot befindet, wird im folgenden für die Reihenfolge die Slotnummer verwendet anstatt der PRN Nummer des Satelliten nach der tatsächlich gesucht wird. Fig. 3 zeigt dabei die Anordnung der Slots auf den Ellipsen und wird im nachfolgenden noch näher erläutert.

Dem optimierten Suchverfahren liegen nun folgende Suchkriterien zugrunde:
**A.)** Es wird nach Satelliten gesucht die, nach dem aktuellsten verfügbaren Stand der Satellitenanordnung, einem Slot zugeordnet sind. Nach Satelliten die, nach dem aktuellen Stand der Satellitenanordnung, keinem Slot zugeordnet sind, wird dagegen als letztes gesucht oder gar nicht. Dies hängt beispielsweise davon ab, wieviel Zeit in einem vorbestimmten Suchintervall für die Satellitensuche noch zur Verfügung steht oder ob der Satellit im Moment überhaupt in Betrieb ist usw..
**B.)** Weiter sucht man nach zwei Satelliten auf derselben Ellipse, deren räumliche Anordnung so ist, dass sie beide im Wesentlichen nicht zur selben Zeit für den Empfänger sichtbar sind. Dann kann man davon ausgehen, dass normalerweise genau einer gefunden werden kann. Sucht man also Satelliten in solchen Paaren, dann kann man davon ausgehen, dass genau 50% der gesuchten Satelliten auch gefunden werden. Hat man beispielsweise 14 Kanäle, kann man in der ersten Suche bereits sieben Satelliten finden. Das ist ausreichend für die Berechnung einer 3D-Position sogar mit einer erhöhten Genauigkeit. Die Satelliten, die diese Bedingung erfüllen, d.h. die im Wesentlichen nicht zur selben Zeit für den Empfänger sichtbar sind, sind solche, die sich auf derselben Ellipse befinden, mit einem Unterschied von ca. 180° in der sog. "Mean Anomaly" bzw. der mittleren Anomalie. Man sucht daher nach Satelliten-Paaren auf derselben Ellipse, die möglichst nahe bei der mittleren Anomalie von 180° liegen bzw. nach Satelliten-Paaren auf derselben Ellipse die zumindest der mittleren Anomalie von 180° von allen anderen Satelliten-Paaren am nächsten kommen.
**C.)** Wahlweise können zusätzlich zu den Kriterien **A.)** und **B.)** die Satelliten benachbarter Ellipsen so gewählt werden, dass sie einen Unterschied von beispielsweise ca. 90° in der mittleren Anomalie aufweisen. Man sucht daher nach Satelliten auf benachbarten Ellipsen die der mittleren Anomalie von ca. 90° möglichst nahe kommen bzw. im Vergleich zu anderen betrachteten Satelliten am nächsten kommen. Somit garantiert man, dass ein großer Teil des Himmels abgesucht wird. Dadurch wird sichergestellt, dass nicht nur an einem Teil des Himmels gesucht wird, der für den Empfänger gar nicht sichtbar ist.

Die Satelliten werden auf Basis der Kriterien A.) bis C.) in eine Suchreihenfolge durch die Auswahleinrichtung gebracht und in der Speichereinrichtung beispielsweise abgespeichert.

Da Slots in Wirklichkeit häufig nicht genau in Abständen von 180 ° auf derselben Ellipse und auch nicht mit genau 90 ° Unterschied auf benachbarten Ellipsen angeordnet, stellt die Auswahl der Satelliten häufig eine Annäherung dar. Es werden daher, wie zuvor beschrieben wurde, beispielsweise die Satelliten genommen, die der zuvor beschriebenen mittleren Anomalie von ca. 90° bzw. ca. 180° möglichst nahe kommen oder zumindest im Vergleich zu anderen betrachteten Satelliten am nächsten sind. Es gibt dadurch mehrere Möglichkeiten wie die Satelliten ausgewählt werden können.

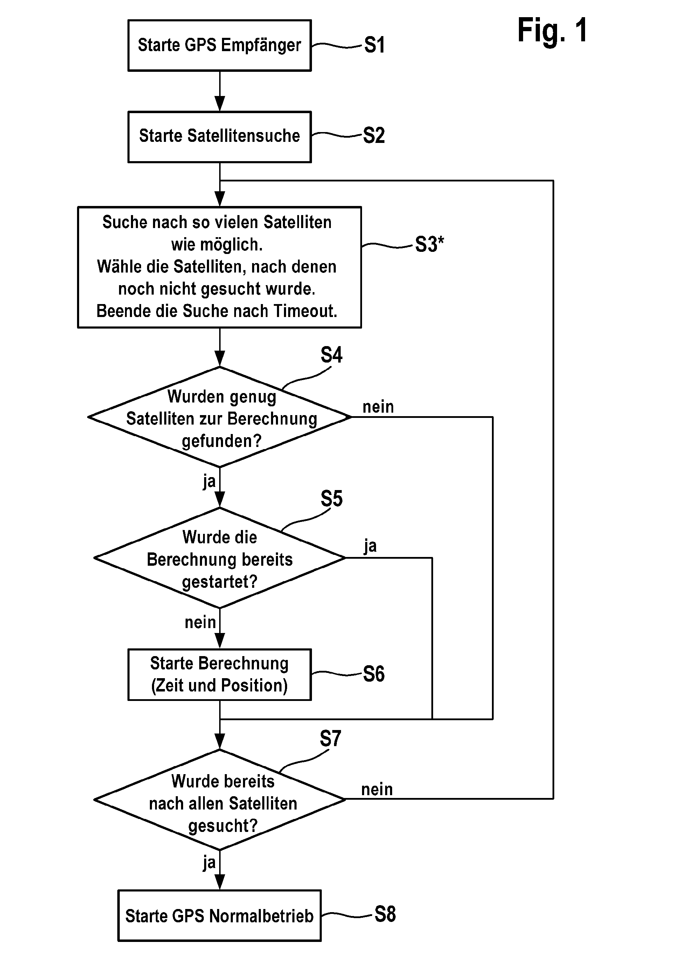

In Fig. 1 ist nun zunächst ein allgemeines Beispiel für ein Ablaufdiagramm einer Suchreihenfolge für Satelliten gezeigt.
Fig. 1 zeigt dabei den Ablauf für einen Kaltstart.

Das Ablaufdiagramm beginnt mit dem **Schritt S1,** dem Starten des GPS-Empfängers, der beispielsweise mit einem Fahrzeug und dessen Navigationssystem verbunden ist. Man unterscheidet dabei zwischen einem Warmstart und einem Kaltstart. Beim Kaltstart liegen in einem GPS-Empfänger keine aktuellen Systemdaten und Betriebsparameter vor, oder die Daten sind veraltet und stimmen u.U. nicht mehr mit den tatsächlichen Systemdaten bzw. Betriebsparametern überein. Durch die fehlenden Informationen können die GPS-Empfänger nicht die sichtbaren bzw. günstig zu empfangenden Satelliten bestimmen, weshalb der GPS-Empfänger die einzelnen vorgesehenen Satelliten des GPS-Systems durchprobieren muss. Beim Warmstart kann dagegen der GPS-Empfänger aufgrund der vorhandenen Betriebsparameter gezielt auf die Suche nach Satelliten gehen. Die vorliegende Erfindung betrifft nur die Kaltstartphase des GPS-Systems.

Nachdem also in **Schritt S1** der GPS-Empfänger gestartet wurde, wird in einem zweiten **Schritt S2** als nächstes die Satellitensuche gestartet. Dabei werden in einem folgenden **Schritt S3** zunächst so viele Satelliten wie möglich gewählt, wobei die Satelliten gewählt werden, nach denen noch nicht gesucht wurde. Die Suche wird nach Ablauf einer vorgegebenen Zeitspanne TIMEOUT beendet. Dann wird in einem nächsten **Schritt S4** abgefragt, ob genügend Satelliten gefunden wurden, beispielsweise wenigstens vier Satelliten zu einer Bestimmung der Position und des Zeitpunkts des Fahrzeugs, das mit dem GPS-System verbundenen ist. Wurden hierbei jedoch nicht genügend Satelliten gefunden, d.h. Schritt S4 ist gleich Nein, so geht das Ablaufdiagramm weiter zu **Schritt S7.** In Schritt S7 wird abgefragt, ob bereits nach allen Satelliten gesucht wurde. Wurde hierbei nicht nach allen Satelliten bereits gesucht, so lautet Schritt S8 gleich Nein und das Ablaufdiagramm geht zurück zu Schritt S3, um eine neue Suche nach Satelliten durchzuführen. Ansonsten, wenn Schritt S8 Ja lautet, wird das GPS-System im Normalbetrieb gestartet.

In dem Fall nun, dass in dem **Schritt S4** bestimmt wird, dass genügend Satelliten zur Berechnung gefunden wurden, also beispielsweise mindestens vier Satelliten (Schritt S4: Ja) so geht das Ablaufdiagramm weiter zu **Schritt S5.** Dort wird abgefragt, ob die Berechnung des Fahrzeugs, das mit dem GPS-System verbunden ist, bereits gestartet wurde oder nicht. Wurde die Berechnung bereits gestartet (Schritt S5: Ja) so geht das Ablaufdiagramm weiter zu Schritt S7, dort wird, wie zuvor beschrieben wurde, abgefragt, ob alle Satelliten gesucht wurden und wenn ja, dann wird der GPS-System Normalbetrieb gestartet. Wird in Schritt S5 dagegen festgestellt, dass die Berechnung noch nicht gestartet wurde (Schritt S5: Nein), so wird in einem nachfolgenden **Schritt S6** die Berechnung gestartet. Die Berechnung umfasst dabei das Berechnen der Zeit und der Position des mit dem GPS-System verbundenen Fahrzeugs. Im Anschluss daran folgen, die zuvor beschriebenen **Schritte S7 und S8**, in denen bestimmt wird, ob nach allen Satelliten gesucht wurde, bevor der GPS-System Normalbetrieb gestartet wird.

Eine Suche von so vielen Satelliten wie möglich in Schritt S3 kann hierbei unter Umständen verhältnismäßig langwierig sein, wenn die Satelliten in einer wahllosen Reihenfolge gesucht werden. Da hierbei beispielsweise auch Satelliten in die Suche mit einbezogen werden, die beispielsweise außer Betrieb oder nicht im Empfangsbereich oder nicht sichtbar sind, zum Zeitpunkt der Suche.

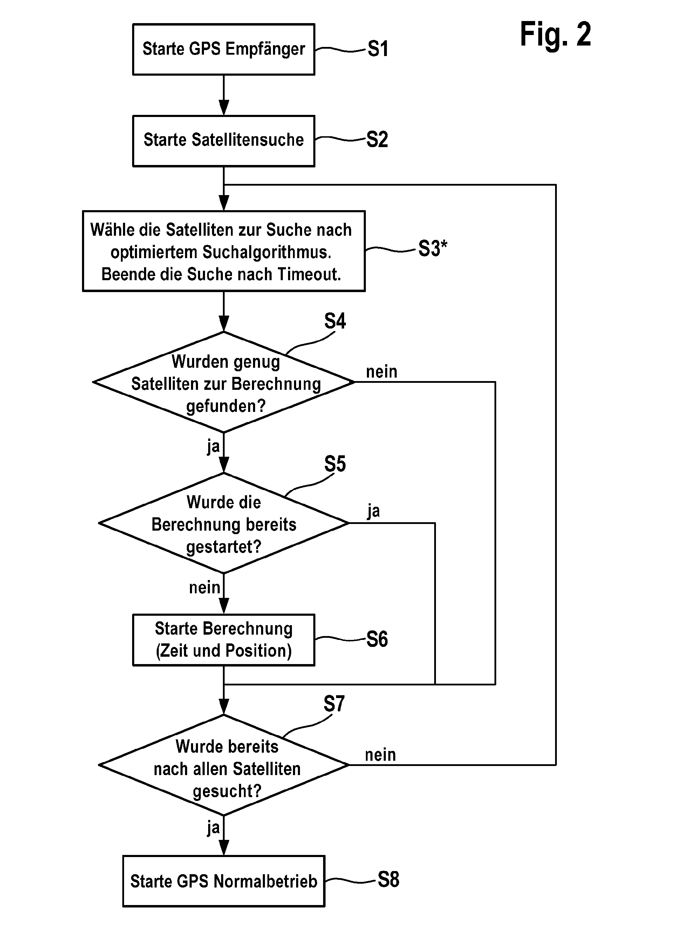

In Fig. 2 ist daher ein Beispiel für ein Verfahren für eine Satellitensuche gemäß der Erfindung gezeigt, bei welchem das Suchverfahren optimiert ist.

Dieses Verfahren unterscheidet sich dabei von der Satellitensuche, wie sie in dem Ablaufdiagramm in Fig. 1 dargestellt ist dadurch, dass in dem **Schritt S3*** die Satelliten nach einem optimierten Suchalgorithmus ausgewählt werden und nicht wahllos. Dieser optimierte Suchalgorithmus berücksichtigt dabei die zuvor beschriebenen Suchkriterien **A.), B.)** und/oder **C.).** Nach einer vorbestimmten Zeitspanne TIMEOUT wird die Suche beendet und das Ablaufdiagramm geht weiter zu **Schritt S4**, wo bestimmt wird, ob genügend Satelliten zur Berechnung gefunden wurden, beispielsweise wenigstens vier Satelliten, bis am Ende des Ablaufdiagramms in **Schritt S8** der Normalbetrieb des GPS-Systems des Fahrzeugs gestartet wird.

Die Durchführung der optimierten Suche nach Satelliten, wie sie in **Schritt S3*** stattfindet wird anhand von Fig. 3 näher erläutert. In Fig. 3 ist zunächst eine Anordnung von Slots auf mehreren Ellipsen dargestellt. Den Slots ist dabei jeweils ein Satellit zugeordnet, der sich auf der jeweiligen Ellipse bzw. der Ellipsenbahn um die Erde bewegt. Bei dem GPS-System werden beispielsweise 24 Satelliten eingesetzt, die alle die Erde in der gleichen Höhe auf sechs Umlaufbahnen in Form von Ellipsen umkreisen.

Im vorliegenden Beispiel sind entsprechend sechs Ellipsenbahnen A bis F dargestellt, die jeweils vier Satelliten A1-A4, B1-B4, C1-C4, D1-D4, E1-E4 und F1-F4 aufweisen. Des Weiteren ist in dem Diagramm die mittlere Anomalie (Mean Anomaly)und der Äquator eingezeichnet.

In **Schritt S3*** wird dabei zunächst beispielsweise gemäß dem Suchkriterium **A.)** nach den Satelliten in Fig. 3 gesucht, die einem jeweiligen Slot zugeordnet sind. Da die Suchreihenfolge davon unabhängig ist, welcher Satellit sich hinter welchem Slot A1-A4, B1-B4, C1-C4, D1-D4, E1-E4 und F1-F4 befindet, wird für die Reihenfolge der Satelliten daher deren Slotnummer genommen anstatt der PRN Nummer des Satelliten der tatsächlich gesucht wird. In Fig. 3 sind die Satelliten A1-A4, B1-B4, C1-C4, D1-D4, E1-E4 und F1-F4 der Ellipsen A bis F, daher diejenigen Satelliten, denen jeweils ein Slot zugeordnet ist und die zuerst gesucht werden. Satelliten die nach dem aktuellsten verfügbaren Stand der Satellitenanordnung keinem Slot zugeordnet sind werden als letztes oder gar nicht gesucht.

Des Weiteren werden nun gemäß dem Suchkriterium **B.)** zwei Satelliten auf einer Ellipse gesucht, die räumlich derart angeordnet sind, so dass normalerweise wenigstens einer von diesen für den GPS-Empfänger sichtbar ist.

In Bezug auf Fig. 3 weisen die Satelliten zunächst eine ungefähre mittlere Anomalie auf von:

| | | | |
|---|---|---|---|
| A1: 264° | A2: 160° | A3: 12,8° | A4: 48° |
| B1: 80° | B2: 185,6° | B3: 305,6° | B4: 206,4° |
| C1: 112° | C2: 9,6° | C3: 340,8° | C4: 244,8° |
| D1: 134,4° | D2: 283,2° | D3: 35,2° | D4: 176° |
| E1: 238,4° | E2: 340,8° | E3: 108,8° | E4: 137,6° |

Um nun zu bestimmen welche Satelliten-Paare auf einer Ellipse einer mitteleren Anomalie von ca. 180° am nächsten kommen, wird zunächst die Differenz zwischen den einzelnen Satelliten auf einer Ellipse berechnet. Dabei gibt es normalerweise immer zwei Winkel (einer größer als 180° und einer kleiner als 180°). Im folgenden wird immer der kleinere Winkel durchgehend angegeben, der Übersicht wegen:

| | |
|---|---|
| A1 - A2: 104° | A3 - A4: 35,2° |
| A1 - A3: 108,8° | A2 - A4: 112° |
| ***A1* - *A4 : 144* °** | ***A2 - A3 : 147,2* °** |
| | |
| B1 - B2: 105,6° | B3 - B4: 99,2° |
| B1 - B3: 134,4° | B2 - B4: 20,8° |
| ***B1 - B4: 126,4°*** | ***B2 - B3: 120°*** |
| | |
| C1 - C2: 102,4° | C3 - C4: 96° |
| ***C1 - C3: 131,2°*** | ***C2 - C4: 124,8°*** |
| C1 - C4: 132,8° | C2 - C3: 28,8° |
| | |
| ***D1 - D2: 148,8°*** | ***D3 - D4: 140,8°*** |
| D1 - D3: 99,2° | D2 - D4: 107,2° |
| D1 - D4: 41,6° | D2 - D3: 112° |
| | |
| E1 - E2: 105,6° | E3 - E4: 99,2° |
| E1 - E3: 126,4° | E2 - E4: 28,8° |
| ***E1 - E4: 134,4°*** | ***E2 - E3: 128°*** |
| | |
| F1 - F2: 102,4° | F3 - F4: 28,8° |
| ***F1 - F3 : 129,60* °** | ***F2 - F4: 156,8°*** |
| F1 - F4: 100,8° | F2 - F3: 128° |

Gemäß dem Kriterium **B.)** wählt man aus jeder der Ellipsen A bis F die Differenz-Paare aus, bei welchen die Differenzen eines oder hier beider Paare (d.h. die zwei Werte in einer Zeile) einer Ellipse möglichst nahe an 180° liegen.

Ein GPS Receiver verfügt normalerweise über mehrere Kanäle, beispielsweise 12. Auf den 12 Kanälen kann man nun parallel 12 Satelliten suchen.

Die 24 Satelliten, auf die das Kriterium **B.)** zutrifft sind fett und kursiv hervorgehoben. Aus diesen 24 Satelliten können nun, 12 Satelliten mit Hilfe der 12 freien Kanäle des GPS-Systems beispielsweise gleichzeitig gesucht werden. Dabei wird jeweils ein Satelliten-Paar für jede Ellipse genommen. Mit anderen Worten man sucht hierbei beispielsweise entweder nach dem Satelliten-Paar A1 und A4 oder nach dem Satelliten-Paar A2 und A3 aber nicht gleichzeitig nach beiden Satelliten-Paaren A1 und A4 bzw. A2 und A3.

Eine Suchreihenfolge kann daher wie folgt lauten:
Kanal 1: A1, Kanal 2: A4, Kanal 3: B1, Kanal 4: B4,
Kanal 5: C1, Kanal 6: C3, Kanal 7: D1, Kanal 8: D2,
Kanal 9: E1, Kanal 10: E4, Kanal 11: F1, Kanal 12: F3

Nach der ersten Kaltstartsuche des GPS-Empfängers wird auf den freien Kanälen, d.h. auf denen kein Satellit gefunden wurde, weitergesucht. Bei der oben genannten Kanalbelegung wäre die nächsten Suchreihenfolge wie folgt, wenn man theoretisch davon ausgeht, dass in der Kaltstartsuche zunächst kein Satellit gefunden würde. In der nächste Suchreihenfolge würden hierbei beispielsweise die verbleibenden 12 der 24 Satelliten gesucht. Die Suchreihenfolge lautet dann wie folgt:
Kanal 1: A2, Kanal 2: A3, Kanal 3: B2, Kanal 4: B3,
Kanal 5: C2, Kanal 6: C4, Kanal 7: D3, Kanal 8: D4,
Kanal 9: E2, Kanal 10: E3, Kanal 11: F2, Kanal 12: F4

Sind in der Kaltstartphase dagegen bereits Satelliten gefunden, was sehr wahrscheinlich ist, so werden statt aller 12 verbleibender Satelliten, die beispielsweise in der Speichereinrichtung abgelegt sind, eben nur ein Teil der Satelliten-Paare ausgewählt, für die noch offenen bzw. freien Kanäle.

Die zwei vorgenannten Suchreihenfolgen sind lediglich beispielhaft, so können die 24 Satelliten-Paare auf die das Kriterium **B.)** zutrifft beliebig in einer Suchreihenfolge kombiniert werden, während die übrig gebliebenen Satelliten-Paare in der anschließenden Suchreihenfolge berücksichtigt werden, entsprechend der Anzahl an Kanälen die noch frei bzw. noch nicht besetzt sind. Dabei muss die Suchreihenfolge auch nicht mit den Ellipsen A, B, C usw. beginnen, sondern die Ellipsen bzw. deren Satelliten-Paare können in einer beliebigen Reihenfolge betrachtet werden.

In einer weiteren erfindungsgemäßen Ausführungsform kann man zusätzlich zu dem Kriterium **B.)** auch das Kriterium **C.)** anwenden, um von den 24 Kanälen, die das Kriterium **B.)** erfüllen die 12 Satelliten auszuwählen nach denen zuerst gesucht wird.

Angenommen man sucht auf Kanal 1 nach dem Satellit A1, dann sucht man auf dem Kanal 2 nach dem Satellit A4, da das Satelliten-Paar A1, A4 mit einer mittleren Anomalie von 144° nahe an 180° liegt.

Mit den Kanälen 3 und 4 soll jetzt nach den Satelliten auf der benachbarten Ellipse B gesucht werden. Dabei kommen entweder die Satelliten B1 und B4 oder die Satelliten B2 und B3 in Frage. Um jetzt zwischen den Satelliten auf der Ellipse B zu wählen, wird die Differenz der mittleren Anomalie zwischen den Satelliten A1 und A4 und den benachbarten B-Satelliten berechnet:

| | |
|---|---|
| A1 - B4: 57,6° | A4 - B1: 32° |
| ***A1 - B2: 78,4°*** | ***A4 - B3: 102,4°*** |

Nach dem Kriterium **C.)** soll die Differenz möglichst nah an 90° liegen. Auch hier gilt wieder, dass der genaue Wert häufig nicht erreicht werden kann. Man wählt in diesem Fall daher die Satelliten B2 und B3, da ihr Abstand zu den A-Satelliten, hier die Satelliten A1 und A4, näher bei 90° liegt. Entsprechend kann man in einem nächsten Schritt für die Satelliten der Ellipse C, wie zuvor mit Bezug auf die Ellipsen A und B beschrieben wurde, die mittlere Anomalie gegenüber den Satelliten der Ellipse B berechnen usw., um zu bestimmen, welche der C-Satelliten am nächsten an 90° liegen.

Lässt man das Kriterium **C.)** weg und nimmt nur das Kriterium **B.),** so ist die Auswahl der Satelliten aus den 24 vorhandenen Satelliten quasi beliebig, so lange die Satelliten-Paare gleichzeitig gesucht werden.

In diesem Fall können gemäß dem Kriterium **B.)** statt aus jeder der Ellipsen A bis F die Differenz-Paare auszuwählen, bei welchen die Differenzen beider Paare (d.h. die zwei Werte in einer Zeile) einer Ellipse möglichst nahe an 180° liegen, wie dies zuvor beschrieben wurde, auch die Paare einer Ellipse ausgewählt werden, deren Wert am nächsten an 180° liegt. Dies sind die folgenden fett und kursiv hervorgehobenen Paare:

| | |
|---|---|
| A1 - A2: 104° | A3 - A4: 35,2° |
| A1 - A3: 108,8° | A2 - A4: 112° |
| A1 - A4: 144° | ***A2 - A3: 147,2°*** |
| | |
| B1 - B2: 105,6° | B3 - B4: 99,2° |
| ***B1 - B3: 134,4°*** | B2 - B4: 20,8° |
| B1 - B4: 126,4° | B2 - B3: 120° |
| | |
| C1 - C2: 102,4° | C3 - C4: 96° |
| C1 - C3: 131,2° | C2 - C4: 124,8° |
| ***C1 - C4: 132,8°*** | C2 - C3: 28,8° |
| ***D1 - D2: 148,8°*** | D3 - D4: 140,8° |
| D1 - D3: 99,2° | D2 - D4: 107,2° |
| D1 - D4: 41,6° | D2 - D3: 112° |
| | |
| E1 - E2: 105,6° | E3 - E4: 99,2° |
| E1 - E3: 126,4° | E2 - E4: 28,8° |
| ***E1 - E4: 134,4°*** | E2 - E3: 128° |
| | |
| F1 - F2: 102,4° | F3 - F4: 28,8° |
| F1 - F3: 129,6° | **F2 - F4: 156,8°** |
| F1 - F4: 100,8° | F2 - F3: 128° |

Eine Suchreihenfolge für 12 Satelliten kann daher wie folgt lauten:
Kanal 1: A2, Kanal 2: A3, Kanal 3: B1, Kanal 4: B3,
Kanal 5: C1, Kanal 6: C4, Kanal 7: D1, Kanal 8: D2,
Kanal 9: E1, Kanal 10: E4, Kanal 11: F2, Kanal 12: F4

Nach der ersten Kaltstartsuche des GPS-Empfängers wird auf den freien Kanälen, d.h. auf denen kein Satellit gefunden wurde, weitergesucht. Bei der oben genannten Kanalbelegung wäre die nächsten Suchreihenfolge, wie folgt, wenn man theoretisch davon ausgeht, dass in der Kaltstartsuche zunächst kein Satellit gefunden würde. In diesem Fall können dann die nächsten Satelliten Paare gesucht werden die, nach den zuvor gewählten Satelliten Paaren, am nächsten an 180° liegen. Diese Satelliten Paare sind im folgenden fett und kursiv hervorgehoben.

| | |
|---|---|
| A1 - A2: 104° | A3 - A4: 35,2° |
| A1 - A3: 108,8° | A2 - A4: 112° |
| ***A1 - A4: 144°*** | A2 - A3: 147,2° |
| | |
| B1 - B2: 105,6° | B3 - B4: 99,2° |
| B1 - B3: 134,4° | B2 - B4: 20,8° |
| ***B1 - B4: 126,4°*** | B2 - B3: 120° |
| | |
| C1 - C2: 102,4° | C3 - C4: 96° |
| ***C1 - C3: 131,2°*** | C2 - C4: 124,8° |
| C1 - C4: 132,8° | C2 - C3: 28,8° |
| | |
| D1 - D2: 148,8° | ***D3 - D4: 140,8°*** |
| D1 - D3: 99,2° | D2 - D4: 107,2° |
| D1 - D4: 41,6° | D2 - D3: 112° |
| | |
| E1 - E2: 105,6° | E3 - E4: 99,2° |
| E1 - E3: 126,4° | E2 - E4: 28,8° |
| E1 - E4: 134,4° | ***E2 - E3: 128°*** |
| | |
| F1 - F2: 102,4° | F3 - F4: 28,8° |
| ***F1 - F3: 129,6°*** | F2 - F4: 156,8° |
| F1 - F4: 100,8° | F2 - F3: 128° |

Eine Suchreihenfolge für diese Satellitenpaare lautet wie folgt:
Kanal 1: A1, Kanal 2: A4, Kanal 3: B1, Kanal 4: B4,
Kanal 5: C1, Kanal 6: C3, Kanal 7: D3, Kanal 8: D4,
Kanal 9: E2, Kanal 10: E3, Kanal 11: F1, Kanal 12: F3

Die vorliegende Erfindung ist nicht auf GPS-Systeme beschränkt, die mit einem Fahrzeug verbunden sind, beispielsweise mit einem Navigationssystem des Fahrzeugs. Das zuvor beschrieben Verfahren und die Vorrichtung für eine Satellitensuche bei GPS-Systemen kann auf alle GPS-Systeme angewendet werden. Darunter sind beispielsweise GPS-Systeme die in Verbindung mit Navigationssystemen verwendet werden, darunter beispielsweise auch tragbare Navigationssysteme, für Kompassanwendungen, Handys usw., um nur einige Beispiele für eine Vielzahl von Möglichkeiten zu nennen. Des Weiteren ist die vorliegende Erfindung auch nicht auf die Anzahl und Anordnung der Ellipsen und Slots beschränkt, diese können grundsätzlich beliebig variiert werden. Entsprechendes gilt auch für die Anzahl der Kanäle der GPS-Systeme zum Suchen von Satelliten, diese können in ihrer Anzahl ebenfalls beliebig variiert werden.

## Patentansprüche

1. Verfahren zur Auswahl wenigstens eines Satelliten-Paares unter mehreren Satelliten (A1-A4 bis F1-F4) für eine Suchreihenfolge (Schritt S3*) zur Bestimmung von Satelliten zur Initialisierung eines Empfängers für ein satellitengestütztes Ortungssystem, wobei die Satelliten jeweils auf mehreren Umlaufbahnen (A-F) um die Erde angeordnet sind,
wobei ein Satelliten-Paar bestehend aus zwei Satelliten (A1, A4; A2, A3) auf wenigstens einer ersten Umlaufbahn (A) ausgewählt wird,
wobei die beiden Satelliten dabei in einem Winkel auf der Umlaufbahn (A) voneinander beabstandet sind, der einem Winkel von 180° möglichst nahe kommt oder am nächsten ist.

2. Verfahren nach Anspruch 1, **dadurch gekennzeichnet, dass** die Differenz der Winkel der mittleren Anomalie der beiden Satelliten (A1, A4; A2, A3) von allen Satelliten-Paaren auf der selben Umlaufbahn (A) einem Winkel von 180° möglichst nahe kommt oder am nächsten ist.

3. Verfahren nach wenigstens einem der Ansprüche 1 oder 2, **dadurch gekennzeichnet, dass** auf der ersten Umlaufbahn (A) jeweils zwei Satelliten-Paare (A1, A4; A2, A3) ausgewählt werden, wobei die beiden Satelliten (A1, A4; A2, A3) jedes Satelliten-Paares dabei in einem Winkel auf der Umlaufbahn voneinander beabstandet sind, der einem Winkel von 180° möglichst nahe kommt oder am nächsten ist.

4. Verfahren nach Anspruch 3, **dadurch gekennzeichnet, dass** eines der Satelliten-Paare (A1, A4) für eine erste Suchreihenfolge verwendbar ist und das zweite Satelliten-Paar (A2, A3) für eine zweite Suchreihenfolge.

5. Verfahren nach wenigstens einem der Ansprüche 1 oder 2, **dadurch gekennzeichnet, dass** neben dem Satelliten-Paar (A1, A4) auf der ersten Umlaufbahn (A) ein Satelliten-Paar (B2, B3) aus einer zweiten Umlaufbahn (B) bestimmt wird, wobei die Satelliten (A1, A4) des Satelliten-Paars der ersten Umlaufbahn (A) mit den Satelliten (B2, B3) des Satelliten-Paars der zweiten Umlaufbahn (B) eine Winkeldifferenz in der mittleren Anomalie aufweisen, die einem Winkel von 90° möglichst nahe kommt oder am nächsten liegt, beispielsweise im Vergleich zu den anderen Satelliten-Paaren (B1, B4) der zweiten Umlaufbahn (B).

6. Verfahren nach wenigstens einem der Ansprüche 1 bis 5, **dadurch gekennzeichnet, dass** die Satelliten (A1-A4 bis F1-F4) der Satellitenumlaufbahnen (A-F) für eine Suchreihenfolge gewählt werden, denen ein Slot auf der jeweiligen Umlaufbahn (A-F) zugeordnet ist.

7. Verfahren nach Anspruch 6, **dadurch gekennzeichnet, dass** die Zuweisung der jeweiligen Satelliten (A1-A4 bis F1-F4) zu den Slots beispielsweise vor der Bestimmung der Suchreihenfolge (Schritt S3*) bestimmt bzw. aktualisiert wird.

8. Satellitenempfänger für ein satellitengestütztes Ortungssystem, wobei der Empfänger eine Auswahleinrichtung und eine Speichereinrichtung aufweist zur Auswahl und Speicherung wenigstens eines Satelliten-Paares unter mehreren Satelliten (A1-A4 bis F1-F4) für eine Suchreihenfolge, zur Bestimmung von Satelliten zur Initialisierung des Empfängers,
wobei die Auswahleinrichtung ein Satelliten-Paar bestehend aus zwei Satelliten (A1, A4; A2, A3) auf wenigstens einer ersten Umlaufbahn (A) ausgewählt,
wobei die beiden Satelliten dabei in einem Winkel auf der Umlaufbahn (A) voneinander beabstandet sind, der einem Winkel von 180° möglichst nahe kommt oder am nächsten ist.

9. Satellitenempfänger nach Anspruch 8, **dadurch gekennzeichnet, dass** die Auswahleinrichtung auf der ersten Umlaufbahn (A) jeweils zwei Satelliten-Paare (A1, A4; A2, A3) ausgewählt, wobei die beiden Satelliten (A1, A4; A2, A3) jedes Satelliten-Paares dabei in einem Winkel auf der Umlaufbahn voneinander beabstandet sind, der einem Winkel von 180° möglichst nahe kommt oder am nächsten ist, wobei eines der Satelliten-Paare für eine erste Suchreihenfolge und das andere Satelliten-Paar für eine zweite Suchreihenfolge in der Speichereinrichtung abspeicherbar ist.

10. Satellitenempfänger nach Anspruch 8, **dadurch gekennzeichnet, dass** die Auswahleinrichtung neben dem Satelliten-Paar (A1, A4) auf der ersten Umlaufbahn (A) ein Satelliten-Paar (B2, B3) aus einer zweiten Umlaufbahn (B) bestimmt, wobei die Satelliten (A1, A4) des Satelliten-Paars der ersten Umlaufbahn (A) mit den Satelliten (B2, B3) des Satelliten-Paars der zweiten Umlaufbahn (B) eine Winkeldifferenz in der mittleren Anomalie aufweisen, die einem Winkel von 90° möglichst nahe kommt oder am nächsten liegt, im Vergleich beispielsweise zu den anderen Satelliten-Paaren (B1, B4) der zweiten Umlaufbahn (B),
wobei beide Satelliten-Paare (A1, A4; B2, B3) in der Speichereinrichtung für eine erste Suchreihenfolge abspeicherbar sind.
